# EUROPÄISCHE PATENTSCHRIFT

(11) **EP 1 427 625 B1**
(45) Veröffentlichungstag und Bekanntmachung des Hinweises auf die Patenterteilung: **19.01.2005**
(21) Anmeldenummer: 02772286.7
(22) Anmeldetag: 11.09.2002
(51) Int. Cl.: B62D 5/083

(54) **DREHSCHIEBERVENTIL FÜR HILFSKRAFTLENKUNGEN**
ROTARY SLIDE VALVE FOR SERVO-ASSISTED STEERING SYSTEMS
SOUPAPE A TIROIR ROTATIF POUR SYSTEMES DE DIRECTION ASSISTEE

(30) Priorität: 18.09.2001 DE 10145903
(43) Veröffentlichungstag der Anmeldung: 16.06.2004
(73) Patentinhaber: ZF Lenksysteme GmbH, 73527 Schwäbisch Gmünd (DE)
(72) Erfinder: HOFFER, Andreas, 74405 Gaildorf (DE); SCHÄNZEL, Rainer, 73457 Essingen (DE)
(86) Internationale Anmeldenummer: PCT/EP2002/010164
(87) Internationale Veröffentlichungsnummer: WO 2003/024765

(56) Entgegenhaltungen:
- WO-A-01/76933
- DE-A- 3 634 215
- FR-A- 2 178 379
- US-A- 5 357 845
- US-A- 5 511 630
- US-A- 5 842 536
- PATENT ABSTRACTS OF JAPAN vol. 1999, no. 13, 30. November 1999 (1999-11-30) -& JP 11 208491 A (KOYO SEIKO CO LTD), 3. August 1999 (1999-08-03)

## Beschreibung

Die Erfindung betrifft ein Drehschieberventil für Hilfskraftlenkungen von Kraftfahrzeugen gemäß dem Oberbegriff des Anspruches 1.

Bei bekannten Drehschieberventilen der eingangs genannten Art (DE 198 08 796 A1) ist das Eingangsglied des Ventiles mit der Lenksäule verbunden und es ist das Ausgangsglied, das an das Lenkgetriebe anschließt, drehmomentenabhängig tordierbar an das Eingangsglied angeschlossen, wobei die Kupplung zwischen Eingangs- und Ausgangsglied über eine Drehstabfeder erfolgt und drehwinkelbegrenzt ist. Das Eingangsglied ist ferner zu einem Drehschieber drehfest und koaxial, der seinerseits die Führung für eine Steuerbuchse bildet, die mit dem Ausgangsglied drehfest verbunden ist, so dass Verdrehbewegungen zwischen Eingangsglied und Ausgangsglied den Überdeckungsgrad von in Drehschieber und Steuerbuchse vorgesehenen Überströmöffnungen beeinflussen.

Zur drehfesten Verbindung der Steuerbuchse mit dem Ausgangsglied dient ein radialer Kupplungsstift, der im axialen Überdeckungsbereich von Steuerbuchse und Ausgangsglied im Ausgangsglied fixiert ist und bei der Montage in eine Aufnahme der Steuerbuchse eingeführt wird, derart, dass eine drehfeste und möglichst spielfreie Verbindung gegeben ist. Der Kupplungsstift ist als Spannstift ausgebildet und bedarf deshalb zur Aufnahme einer engen Tolerierung, um in Berücksichtigung der zu übertragenden Drehmomente die angestrebte Spielfreiheit zu erreichen, was die Montage durch radiales Einschieben des Kupplungsstiftes in die Aufnahme bei exzentrischer Lage des Ausgangsgliedes gegenüber der Steuerbuchse erschwert und entsprechende radiale Freiräume bedingt.

In der JP-A-11208491 verjüngt sich die Aufnahme für den Kupplungsstift in der Steuerbuchse ausgehend von einem Eintrittsquerschnitt mit Übermaß zum Kupplungsstift axial auf einen Querschnitt, der kleiner als der Querschnitt des Kupplungsstiftes ist und der Kupplungsstift ist im verjüngten Querschnittsbereich in einer spielfreien Lage verspannt.

Der Erfindung liegt die Aufgabe zugrunde, für ein Drehschieberventil der eingangs genannten Art die Kupplungsverbindung von Ausgangsglied und Steuerbuchse dahingehend auszubilden, dass zur Abstützung der Axialkraftkomponente und zur entsprechenden Belastung des Kupplungsstiftes in Richtung auf seine spielfreie Montageendstellung eine möglichst einfache und sichere Federspannvorrichtung vorzusehen ist.

Erfindungsgemäß wird dies durch die Merkmale des Anspruches 1 erreicht, der von einer Aufnahme für den Kupplungsstift ausgeht, die zum Kupplungsstift einen Übermaßbereich aufweist und in der der Kupplungsstift durch axiale Verlagerung zwischen Ausgangsglied und Steuerbuchse in einen Bereich überführbar ist, in dem eine spielfreie Drehmomentenabstützung bei entsprechend axialer Abstützung des Kupplungsstiftes gegeben ist. Die Aufnahme kann hierzu stirnseitig offen gegen das Ausgangsglied ausgebildet sein, oder auch stirnseitig verschlossen sein, so dass sowohl eine axiale wie auch eine radiale Zusammenführung und Einführung des Kupplungsstiftes in die Aufnahme möglich ist, wobei die axiale Verspannung auf die im Querschnitt verjüngte spielfreie Endlage mit einfachen Mitteln zu erreichen ist.

Zweckmäßigerweise ist die Aufnahme so ausgebildet, dass sie sich axial in Richtung auf die Endlage unter einem kleinen Winkel konisch, bevorzugt keilförmig verjüngt, so dass die zu übertragenden Drehmomente infolge der flachen Neigung der die Aufnahme in Umfangsrichtung begrenzenden Flächen nur eine kleine Axialkraftkomponente zur Folge haben.

Zur Abstützung dieser Axialkraftkomponente und zur entsprechenden Belastung des Kupplungsstiftes in Richtung auf seine spielfreie Montageendstellung erweist es sich als zweckmäßig, den Kupplungsstift axial federnd zu beaufschlagen, wobei eine einfache und zweckmäßige Lösung darin besteht, einen die Steuerbuchse ringförmig zumindest über einen Teil ihres Umfanges umschließenden Spannring vorzusehen, der einerseits axial gegen den Kupplungsstift und andererseits axial gegen eine radiale Stützfläche der Steuerbuchse abgestützt ist, die nach radial innen in Richtung auf den Kupplungsstift, und damit in Richtung auf den sich konisch verjüngenden Teil der Aufnahme geneigt ist, so dass der Kupplungsstift in Richtung auf seine spielfreie Axiallage zur Steuerbuchse belastet ist. Analog bzw. auch ergänzend zur Stützfläche kann auch der Kupplungsstift eine entsprechend geneigte Stützfläche aufweisen, die beispielsweise durch eine entsprechende Anschrägung des Kupplungsstiftes oder auch durch einen kegelförmigen Auslauf des Kupplungsstiftes gebildet sein kann.

Der Federring kann seinerseits aber auch ein entsprechend keilförmiges Stützelement beaufschlagen oder selbst zumindest im Bereich der Überlappung zum Kupplungsstift mit einer keilförmigen Kontur versehen sein, so dass sich entsprechende Abstützkräfte ergeben. Die Aufnahme kann von der Stirnseite der Steuerbuchse ausgehen, so dass eine axiale Einfädelung möglich ist, sie kann aber auch mit Abstand zur geschlossenen Stirnseite der Steuerbuchse liegen, so dass lediglich eine radiale Einfädelung möglich ist, wobei die Einfädelung dann aber dadurch erleichtert ist, dass die Aufnahme in diesem Bereich einen gegenüber dem Durchmesser des Kupplungsstiftes erweiterten Querschnitt aufweist.

Bei einer weiteren erfindungsgemäßen Ausführungsform erfolgt die federnde Verspannung des Kupplungsstiftes axial in Richtung auf seine spielfreie Lage im sich verjüngenden Teil der Aufnahme über eine Axialfeder, beispielsweise einen sich axial erstreckenden Federbügel, der den Kupplungsstift radial außen übergreift und mit seinem vom Kupplungsstift abgelegenen Schenkel in der Steuerbuchse verankert ist, beispielsweise durch Einstecken dieses Schenkels in eine entsprechende Radialbohrung der Steuerbuchse. Der den Kupplungsstift übergreifende und axial belastende Federbügel kann aber auch durch einen axialen Fortsatz eines Spannringes oder dergleichen gebildet sein, dem eine entsprechende Aufnahmenut im Außenumfang der Steuerbuchse zugeordnet ist.

Montagemäßig sind die geschilderten federnden Spannmittel vorteilhaft und können insbesondere bei radialem Einschieben des Kupplungsstiftes in die Aufnahme bereits ihre Montagelage einnehmen, sofern der Kupplungsstift oder die Federmittel Anlaufschrägen aufweisen, die beim radialen Einschieben des Kupplungsstiftes das wechselseitige Aufgleiten ermöglichen.

Weitere Einzelheiten und Merkmale der Erfindung ergeben sich aus den Ansprüchen. Ferner wird die Erfindung nachstehend anhand von Ausführungsbeispielen näher erläutert. Es zeigen:
- Fig. 1: eine teilweise schematisierte Darstellung eines Drehschieberventils im Schnitt, wobei die drehmomentenübertragende Verbindung zwischen Ausgangsglied des Drehschieberventils und Steuerbuchse über einen Kupplungsstift erfolgt und die diesbezügliche Verbindung nur prinzipiell dargestellt ist,
- Fig. 2: eine erste Ausführungsform der drehmomentenübertragenden Verbindung gemäß Ausschnitt II in Fig. 1,
- Fig. 3: in einer schematisierten Ansicht gemäß Pfeil III in Fig. 2 die dem Kupplungsstift zugeordnete Aufnahme in der Steuerbuchse,
- Fig. 4: eine der Fig. 2 entsprechende Darstellung in einer weiteren Ausgestaltung der axialen Verspannung des Kupplungsstiftes in Richtung auf seine spielfreie Lage innerhalb der Aufnahme, und

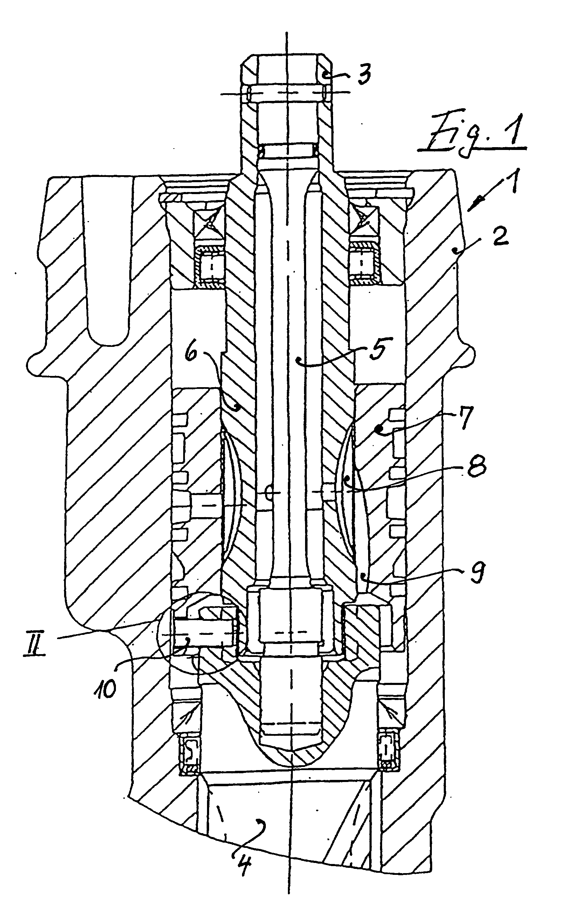

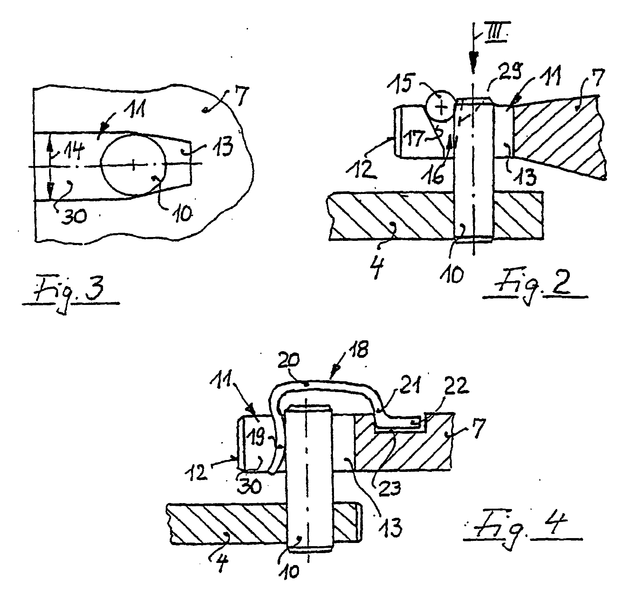

Fig. 1 veranschaulicht den grundsätzlichen Aufbau eines Drehschieberventiles 1 mit einem Gehäuse 2, in dem koaxial ein vom nicht dargestellten Lenkrad her anzutreibendes Eingangsglied 3 und ein Ausgangsglied 4 angeordnet sind, das mit einem Lenkgetriebe verbunden ist und das mit dem Eingangsglied drehmomentenübertragend über eine Drehstabfeder 5 in Verbindung steht, bei Drehwinkelbegrenzung der Verdrehbarkeit zwischen Eingangsglied 3 und Ausgangsglied 4. Das Eingangsglied 3 ist drehfest, im dargestellten Ausführungsbeispiel einstückig mit einem Drehschieber 6 verbunden, der mit einer Steuerbuchse 7 zusammenwirkt, wobei Drehschieber 6 und Steuerbuchse 7 axial verlaufende Steuernuten 8 und 9 aufweisen, die im gleichen Axialbereich liegen und die in ihrem Überdeckungsgrad von der Drehwinkellage des Drehschiebers 6 zur Steuerbuchse 7 abhängig sind. Bei drehfester Verbindung des Drehschiebers 6 zum Eingangsglied 3 ist die Steuerbuchse 7 mit dem Ausgangsglied 4 in einem axial überdeckenden Bereich verbunden, der als Einzelheit II in Fig. 2 schematisiert dargestellt ist, wobei in Fig. 1 im Schema die Verbindung über einen Kupplungsstift 10 veranschaulicht, der bei radialer Erstreckung im Ausgangsglied 4 fixiert ist und dem in der Steuerbuchse 7 eine Aufnahme zugeordnet ist, zu der verschiedene Varianten in den nachfolgenden Figuren 2 bis 4 ersichtlich sind, wobei diese jeweils nur eine Ausschnittsvergrößerung des axialen Überlappungsbereiches zwischen Ausgangsglied 4 und Drehschieber 6 zeigen, in dem die zwischen diesen bestehende Kupplungsverbindung liegt.

In den Ausführungsformen gemäß Figuren 2 bis 4 ist jeweils im Ausgangsglied 4 ein Kupplungsstift 10 eingepresst, der sich, bezogen auf die Gesamtkonfiguration gemäß Fig. 1, radial nach außen erstreckt und der in die Aufnahme 11 eingreift, die in den Darstellungen gemäß Figuren 2 bis 4 gegen die Stirnseite 12 der Steuerbuchse 7 offen ist und die in Gegenrichtung einen sich verjüngenden, insbesondere konisch verjüngenden Bereich 13 aufweist, wobei die in Umfangsrichtung des Drehschiebers 6 gemessene Breite 14 des Eintrittsquerschnittes 30 der Aufnahme 11, ausgehend von der Stirnseite 12, zunächst größer ist als die in gleicher Richtung gemessene Erstreckung des Kupplungsstiftes 10, der insbesondere als Zylinderstift ausgebildet ist. Anschließend an diesen gegenüber dem Kupplungsstift 10 Übermaß aufweisenden Bereich folgt der sich verjüngende Bereich 13, dessen in Umfangsrichtung gemessene Breite in Gegenrichtung zur Stirnseite 12 auslaufend kleiner ist als der Durchmesser des Kupplungsstiftes 10, so dass bei im Bereich 13 liegenden Kupplungsstift 10 eine Kupplungsposition, wie in Fig. 3 gezeigt, gegeben ist, in der der Kupplungsstift 10 in Umfangsrichtung spielfrei in der Aufnahme 11 liegt.

Bezogen auf diese Position veranschaulicht Fig. 2 die Fixierung des Kupplungsstiftes 10 durch dessen Abstützung in Richtung auf das verjüngte Ende des Bereiches 13 durch einen Federring 15, . der, was aus der Zeichnung nicht ersichtlich ist, den Drehschieber 6 in Umfangsrichtung zumindest über den größeren Teil des Umfanges umgreift und dem zumindest im der Aufnahme 11 benachbarten Umfangsbereich eine in Umfangsrichtung verlaufende, rinnenartige Vertiefung 16 zugeordnet ist, die eine Spannschräge 17 aufweist, die radial nach innen auf den Kupplungsstift 10 zuläuft, derart, dass der Kupplungsstift 10 über den Federring 15 in Richtung auf seine dargestellte spielfreie Verriegelungslage belastet ist.

Die hierfür erforderlichen, quer zum Kupplungsstift 10 verlaufenden, axial in Längsrichtung der Aufnahme 11 aufzubringenden Spannkräfte sind vergleichsweise gering, da die Aufnahme 11 im Bereich 13 nur eine schwache Konizität aufweist und sich dementsprechend auch nur eine kleine Querkraftkomponente ergibt, die über den Federring 15 abgefangen werden muß, der zwischen der Spannschräge 17 und dem Kupplungsstift 10 liegt.

Der Kupplungsstift 10 ist im Ausführungsbeispiel durchlaufend zylindrisch ausgebildet. Es kann aber zweckmäßig sein, diesen im Beaufschlagungsbereich durch den Federring abgeflacht auszubilden oder auch auslaufend auf das entsprechende Ende konisch zu gestalten, so dass sich eine zur Spannschräge 17 gegenläufig korrespondierende Spannschräge ergibt, wie strichliert in Fig. 2 bei 29 angedeutet.

Die Darstellungen gemäß Figuren 2 bis 4 gehen davon aus, dass die Aufnahme 11 gegen die Stirnseite 12 offen ist, was eine axiale Einführung des Kupplungsstiftes 10 bei der Montage des Drehschieberventiles 1 entsprechend der Verlagerung von Drehschieber 6 und Ausgangsglied 4 gegeneinander ermöglicht.

Abweichend hiervon kann, was nicht gezeigt ist, die Aufnahme 11 auch zur Stirnseite 12 hin geschlossen sein, so dass nur eine radiale Einfügung des Kupplungsstiftes 10 in die Aufnahme 11 möglich ist, und zwar in Verbindung mit einer entsprechenden radialen Beweglichkeit zwischen Drehschieber 6 und Ausgangsglied 4. Auch in diesem Fall ist die erfindungsgemäße Lösung vorteilhaft, da die erfindungsgemäße Gestaltung der Aufnahme 11 die radiale Einführung in einem Bereich ermöglicht, der zum Kupplungsstift Übermaß aufweist, das durch die nachfolgende Verschiebung in Längsrichtung der Aufnahme 11 durch deren Querschnittsverringerung kompensiert werden kann.

Ausgehend von einem grundsätzlichen Aufbau, wie er vorstehend anhand der Figuren 2 und 3 erläutert wurde, zeigt Fig. 4 eine Variante, bei der anstelle eines umfangsseitig umgreifenden Federringes 15 gemäß Fig. 2 mit einer axial sich erstreckenden Federklammer 18 gearbeitet wird, die den Kupplungsstift 10 mit einem Federschenkel 19 in Richtung auf den sich verjüngenden Bereich 13 der Aufnahme 11 belastet und die im Bereich ihres gegenüberliegenden, über den den Kupplungsstift 10 übergreifenden Bügel 20 angeschlossenen Endes 21 mit dem Drehschieber 6 verbunden ist.

Das Ende 21 kann, was in Fig. 4 nicht gezeigt ist, in einer Einstecköffnung der Steuerbuchse 7 fixiert sein, so dass sich die Federklammer 18 als U-förmiger Bügel darstellt, der beispielsweise dadurch gesichert ist, dass dem Federschenkel 19 ein hinterschnittener Bereich des Kupplungsstiftes 10 als Anlagebereich zugeordnet ist.

Dargestellt ist in Fig. 4 die Federklammer 18 als zu einem in Umfangsrichtung verlaufenden Spannring 22 auskragender Arm, wobei der Spannring 22 im Bereich des Anschlusses der Federklammer 18 in einer nutartigen, in Umfangsrichtung des Drehschiebers 6 verlaufenden Vertiefung liegt und sich zumindest über den größeren Teil des Umfangs der Steuerbuchse 7 erstreckt.

In Ausgestaltung der Erfindung kann es zweckmäßig sein, zwischen Kupplungsstift 10 und Aufnahme 11 eine elastische Einlage vorzusehen, die beispielsweise als dem Kupplungsstift 10 zugehörige, bezogen auf die zur übertragenden Kräfte hinreichend harte elastische Hülse ausgebildet ist, die zur Verbesserung der Gleitreibung beitragen kann, so dass die zur verspannungsfreien Führung der Steuerbuchse 7 auf den Drehschieber 6 erforderlichen Freiheitsgrade gewährleistet sind, wobei über die Buchse auch bei fallweise auftretendem Spiel Schlaggeräusche vermieden werden.

## Patentansprüche

1. Drehschieberventil für Hilfskraftlenkungen von Kraftfahrzeugen mit einem Eingangsglied und einem zu diesem über eine Drehstabfeder abgestützten, drehwinkelbegrenzt gekoppelten Ausgangsglied sowie, zu einem derselben drehfest, mit einem Drehschleber und einer Steuerbuchse, die koaxial zueinander liegend mit Überströmöffnungen versehen sind, welche in Abhängigkeit vom Drehwinkel zwischen Drehschieber und Steuerbuchse in ihrem Überdeckungsgrad veränderbar sind und von denen die Steuerbuchse einen radial außen übergreifenden Axialbereich zum Ausgangsglied aufweist, das einen radialen Kupplungsstift trägt, der, in eine Aufnahme der Steuerbuchse eingefahren, in dieser federverspannt gehalten ist, wobei die Aufnahme (11) sich ausgehend von einem Eintrittsquerschnitt (30) mit Übermaß zum Kupplungsstift (10) axial auf einen Querschnitt (Bereich 13) verjüngt, der kleiner als der Querschnitt des Kupplungsstiftes (10) ist und dass der Kupplungsstift (10) auf eine spielfreie Lage im verjüngten Querschnittsbereich (13) der Aufnahme (11) verspannt ist.
**dadurch gekennzeichnet,**
**dass** der Kupplungsstift (10) axial durch einen in Umfangsrichtung der Steuerbuchse (7) verlaufenden Federring (15) verspannt ist, dem eine Spannschräge (17) zugeordnet ist.

2. Drehschieberventil nach Anspruch 1,
**dadurch gekennzeichnet,**
**dass** die Aufnahme (11) gegen die Stirnseite (12) der Steuerbuchse (7) offen ist

3. Drehschieberventil nach Anspruch 1,
**dadurch gekennzeichnet,**
**dass** die Aufnahme (11) gegen die Stirnseite (12) der Steuerbuchse (7) geschlossen ist

4. Drehschleberventil nach Anspruch 1,
**dadurch gekennzeichnet,**
**dass** die Spannschräge (17) der Steuerbuchse (7) zugeordnet ist.

5. Drehschieberventil nach Anspruch 4,
**dadurch gekennzeichnet,**
**dass** die Spannschräge (17) einer Ringnut der Steuerbuchse (7) zugeordnet ist.

6. Drehschieberventil nach Anspruch 5,
**dadurch gekennzeichnet,**
**dass** die Ringnut eine radial nach innen gegen den Kupplungsstift (10) geneigt verlaufende Flanke als Spannschräge (17) aufweist.

7. Drehschieberventil nach Anspruch 1,
**dadurch gekennzeichnet,**
**dass** die Spannschräge (29) dem Kupplungsstift (10) zugeordnet ist.

8. Drehschieberventil nach Anspruch 7,
**dadurch gekennzeichnet,**
**dass** die Spannschräge durch einen Umfangsbereich des gegen die Steuerbuchse (7) konisch auslaufenden Kupplungsstiftes (10) gebildet ist.

9. Drehschieberventil nach einem der Ansprüche 1 bis 3,
**dadurch gekennzeichnet,**
**dass** der Kupplungsstift (10) durch eine in Längsrichtung der Steuerbuchse (7) sich erstreckende, axiale Federklammer (18) in Richtung auf seine spielfreie Kupplungslage gegenüber der Steuerbuchse (7) verspannt ist.

10. Drehschieberventil nach Anspruch 9,
**dadurch gekennzeichnet,**
**dass** die Federklammer (18) als Klammerbügel ausgebildet ist, dessen einer Federschenkel (19) den Kupplungsstift (10) beaufschlagt und dessen anderer Federschenkel in eine Halteöffnung der Steuerbuchse (7) eingreift.

11. Drehschieberventil nach Anspruch 9,
**dadurch gekennzeichnet,**
**dass** die Federklammer (18) auskragend von einem auf die Steuerbuchse (7) aufsteckbaren und die Steuerbuchse (7) umfangsseitig hintergreifenden Federbügel als Spannring (22) vorgesehen ist.

## Claims

1. Rotary slide valve for servo-assisted steering systems of motor vehicles, having an input element and an output element supported by means of a torsional spring and coupled to said input element with a limited rotational angle, and, fixed in terms of rotation to one of said elements, having a rotary slide and a control sleeve which, lying coaxially to one another, are provided with crossflow openings whose degree of congruence can be varied as a function of the rotational angle between the rotary slide and control sleeve and of which the control sleeve has an axial region which engages radially outwardly over the output element, said output element bearing a radial coupling pin which, inserted into a receptacle of the control sleeve, is held in the latter, tensioned by a spring, the receptacle (11), starting from an entry cross section (30) of excess dimensions in relation to the coupling pin (10), tapering axially to a cross section (region 13) which is smaller than the cross section of the coupling pin (10), and in that the coupling pin (10) is clamped into a position without play in the tapered cross-sectional region (13) of the receptacle (11), **characterized in that** the coupling pin (10) is clamped axially by a spring ring (15) which extends in the peripheral direction of the control sleeve (7) and is assigned a clamping bevel (17).

2. Rotary slide valve according to Claim 1, **characterized in that** the receptacle (11) is open toward the end (12) of the control sleeve (7).

3. Rotary slide valve according to Claim 1, **characterized in that** the receptacle (11) is closed toward the end (12) of the control sleeve (7).

4. Rotary slide valve according to Claim 1, **characterized in that** the clamping bevel (17) is assigned to the control sleeve (7).

5. Rotary slide valve according to Claim 4, **characterized in that** the clamping bevel (17) is assigned to an annular groove of the control sleeve (7).

6. Rotary slide valve according to Claim 5, **characterized in that** the annular groove has a flank, which extends in a manner inclined radially inwardly toward the coupling pin (10), as clamping bevel (17).

7. Rotary slide valve according to Claim 1, **characterized in that** the clamping bevel (29) is assigned to the coupling pin (10).

8. Rotary slide valve according to Claim 7, **characterized in that** the clamping bevel is formed by a peripheral region of the coupling pin (10), said coupling pin (10) tapering conically toward the control sleeve (7).

9. Rotary slide valve according to one of Claims 1 to 3, **characterized in that** the coupling pin (10) is clamped, in the direction of its coupling position without play, with respect to the control sleeve (7) by an axial spring clamp (18) which extends in the longitudinal direction of the control sleeve (7).

10. Rotary slide valve according to Claim 9, **characterized in that** the spring clamp (18) is configured as a clamping clip, whose one spring limb (19) acts on the coupling pin (10) and whose other spring limb engages in a holding opening of the control sleeve (7).

11. Rotary slide valve according to Claim 9, **characterized in that** the spring clamp (18), projecting from a spring clip which can be plugged onto the control sleeve (7) and engages behind the control sleeve (7) on the peripheral side, is provided as clamping ring (22).

## Revendications

1. Soupape à tiroir rotatif pour directions assistées de véhicules automobiles, comportant un élément d'entrée et un élément de sortie assisté par une barre de torsion, couplé à celui-ci avec un angle de rotation limité ainsi que, l'un de ceux-ci étant fixe en rotation, un tiroir rotatif et un manchon de commande, qui, situés coaxialement l'un par rapport à l'autre, sont pourvus d'orifices de débordement qui sont modifiables en fonction de l'angle de rotation entre le tiroir rotatif et le manchon de commande dans leur degré de recouvrement et parmi lesquels le manchon de commande présente une zone axiale empiétant radialement vers l'extérieur par rapport à l'élément de sortie, qui supporte une tige d'accouplement radiale qui est rentrée dans un support du manchon de commande, maintenue par tension de ressort dans celui-ci, le support (11) se rétrécissant, en partant d'une section transversale d'entrée (30) avec une surdimension par rapport à la tige d'accouplement (10), axialement sur une section transversale (zone 13) qui est plus petite que la section transversale de la tige d'accouplement (10) et que la tige d'accouplement (10) est calée à une position exempte de jeu dans la zone de section transversale rétrécie (13) du support (11),
**caractérisée en ce que**
la tige d'accouplement (10) est calée axialement par une rondelle-ressort (15) s'étendant dans un sens circonférentiel du manchon de commande (7) et à laquelle est associée une pente de serrage (17).

2. Soupape à tiroir rotatif selon la revendication 1,
**caractérisée en ce que**
le support (11) est ouvert vers le côté frontal (12) du manchon de commande (7).

3. Soupape à tiroir rotatif selon la revendication 1,
**caractérisée en ce que**
le support (11) est fermé vers le côté frontal (12) du manchon de commande (7).

4. Soupape à tiroir rotatif selon la revendication 1,
**caractérisée en ce que**
la pente de serrage (17) est associée au manchon de commande (7).

5. Soupape à tiroir rotatif selon la revendication 4,
**caractérisée en ce que**
la pente de serrage (17) est associée à une gorge annulaire du manchon de commande (7).

6. Soupape à tiroir rotatif selon la revendication 5,
**caractérisée en ce que**
la gorge annulaire présente un flanc s'étendant avec une inclinaison en direction de la tige d'accouplement (10) radialement vers l'intérieur et faisant office de pente de serrage (17).

7. Soupape à tiroir rotatif selon la revendication 1,
**caractérisée en ce que**
la pente de serrage (29) est associée à la tige d'accouplement (10).

8. Soupape à tiroir rotatif selon la revendication 7,
**caractérisée en ce que**
la pente de serrage est constituée par une zone circonférentielle de la tige d'accouplement (10) se terminant en cône en direction du manchon de commande (7).

9. Soupape à tiroir rotatif selon l'une quelconque des revendications 1 à 3,
**caractérisée en ce que**
la tige d'accouplement (10) est calée par une pince à ressort (18) axiale s'étendant dans le sens longitudinal du manchon de serrage (7) en direction de sa position d'accouplement exempte de jeu par rapport au manchon de commande (7).

10. Soupape à tiroir rotatif selon la revendication 9,
**caractérisée en ce que**
la pince à ressort (18) est réalisée sous forme d'un étrier de type pince dont une branche de ressort (19) sollicite la tige d'accouplement (10) et dont l'autre branche de ressort s'engrène dans un orifice de retenue du manchon de commande (7).

11. Soupape à tiroir rotatif selon la revendication 9,
**caractérisée en ce que**
la pince à ressort (18) est réalisée de manière à déborder d'un étrier à ressort pouvant être posé sur le manchon de commande (7) et enserrant par l'arrière le manchon de commande (7) sur sa circonférence sous la forme d'une bague de serrage (22).
